# EUROPÄISCHE PATENTSCHRIFT

(11) **EP 3 510 275 B1**
(45) Veröffentlichungstag und Bekanntmachung des Hinweises auf die Patenterteilung: **22.03.2023**
(21) Anmeldenummer: 17761886.5
(22) Anmeldetag: 06.09.2017
(51) Int. Cl.: F03D 1/06

(54) **WINDENERGIEANLAGEN-ROTORBLATT**
WIND TURBINE ROTOR BLADE
PALE DE ROTOR D'ÉOLIENNE

(30) Priorität: 09.09.2016 DE 102016117012
(43) Veröffentlichungstag der Anmeldung: 17.07.2019
(73) Patentinhaber: Wobben Properties GmbH, 26607 Aurich (DE)
(72) Erfinder: KAMRUZZAMAN, Mohammad, Southampton SO19 7DG (GB); NAPIERALA, Christian Frank, 26603 Aurich (DE); SWEERS, Heiner, 28205 Bremen (DE)
(74) Vertreter: Eisenführ Speiser
(86) Internationale Anmeldenummer: PCT/EP2017/072301
(87) Internationale Veröffentlichungsnummer: WO 2018/046519

(56) Entgegenhaltungen:
- EP-A1- 2 806 156
- EP-A1- 2 811 156
- EP-A2- 1 112 928
- DE-A1- 19 614 420
- KR-B1- 101 498 684

## Beschreibung

Die vorliegende Erfindung betrifft ein Windenergieanlagen-Rotorblatt.

Windenergieanlagen-Rotorblätter sind in unterschiedlichen Ausgestaltungen bekannt. Zum Beispiel kann ein Rotorblatt einer Windenergieanlage ein sogenanntes Flatbackprofil aufweisen. Bei einem Flatbackprofil laufen die Saugseite und die Druckseite des Rotorblattes an der Hinterkante nicht mehr zusammen, sondern enden in einem Abstand zueinander, d.h. die Hinterkante ist stumpf. Rotorblätter einer Windenergieanlage mit einem Flatbackprofil sind vorteilhaft, weil dadurch die Abmessungen des Rotorblattes reduziert werden. Dies ist insbesondere hinsichtlich des Transportes von Rotorblättern vorteilhaft. Andererseits entstehen durch ein Flatbackprofil andere Probleme insbesondere aeroakustische Probleme. Bei einem Rotorblatt einer Windenergieanlage mit einem Flatbackprofil kann ein als Blunt Trailing-Edge Vortex Shedding bekannter Lärmmechanismus auftreten.

In der prioritätsbegründenden deutschen Patentanmeldung hat das Deutsche Patent- und Markenamt die folgenden Dokumente recherchiert: DE 10 2011 012 965 A1, WO 2016/055 076 A1, DE 10 2014 203 442 A1, DE 20 2016 101 461 U1 und DE 196 14 420 A1.

Weitere Beispiele aus dem Stand der Technik sind in EP2806156A1, EP1112928A2 und EP2811156A1 offenbart.

Es ist eine Aufgabe der vorliegenden Erfindung ein Windenergieanlagen-Rotorblatt vorzusehen, welches die oben genannten Nachteile reduziert bzw. verhindert. Insbesondere ist es eine Aufgabe der vorliegenden Erfindung ein Windenergieanlagen-Rotorblatt mit einem Flatbackprofil vorzusehen, welcher eine Reduzierung der Lärmemission ermöglicht.

Diese Aufgabe wird durch ein Windenergieanlagen-Rotorblatt nach Anspruch 1 gelöst.

Somit wird ein Windenergieanlagen-Rotorblatt mit einer Saugseite, einer Druckseite, einer stumpfen Hinterkante und einer Hinterkantenerweiterungseinheit vorgesehen, welche an der stumpfen Hinterkante angeordnet ist und mindestens zwei Stufen aufweist.

Die Hinterkantenerweiterungseinheit weist einen ersten und zweiten Abschnitt auf, wobei ein Übergang von der stumpfen Hinterkante zu dem ersten Abschnitt und ein Übergang zwischen dem ersten und zweiten Abschnitt jeweils nicht senkrecht ausgestaltet ist.

Gemäß der vorliegenden Erfindung ist die stumpfe Hinterkante sowie die Hinterkantenerweiterungseinheit in einem Rotorblattwurzelbereich des Rotorblattes vorgesehen.

Die Erfindung betrifft ein Windenergieanlagen-Rotorblatt mit einem Flatbackprofil. Die Hinterkante des Rotorblattes ist somit zumindest teilweise flach ausgestaltet. Ferner weist das Rotorblatt eine stufige Hinterkantenerweiterung auf.

Es wird somit ein Windenergieanlagen-Rotorblatt mit einer Saugseite, einer Druckseite und einer Hinterkante vorgesehen, welche zumindest teilweise als Flatbackprofil ausgestaltet ist, so dass die Hinterkante als stumpfe Hinterkante ausgestaltet ist. Die Dicke der Hinterkante beträgt x % einer Pofilsehne. Das Rotorblatt weist ferner eine Hinterkantenerweiterung auf, welche mindestens 2 Stufen aufweist.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine Schnittansicht von zwei Rotorblatt-Profilen,
- Fig. 3: zeigt eine schematische Darstellung von drei verschiedenen Rotorblatt-Profilen mit einem Flatbackprofil,
- Fig. 4: zeigt einen Graphen zur Veranschaulichung des Auftriebsbeiwerts der drei Windenergieanlagen-Profile von Fig. 3,
- Fig. 5: zeigt einen Graphen zur Veranschaulichung des Widerstandsbeiwerts der drei Windenergieanlagen-Profile von Fig. 3,
- Fig. 6: zeigt einen Graphen zur Veranschaulichung der aerodynamischen Güte der drei Windenergieanlagen-Profile von Fig. 3,
- Fig. 7: zeigt eine schematische Schnittansicht einer Hinterkante eines erfindungsgemäßen Windenergieanlagen-Rotorblattes, und
- Fig. 8: zeigt eine schematische Darstellung eines WindenergieanlagenRotorblattes gemäß der Erfindung.

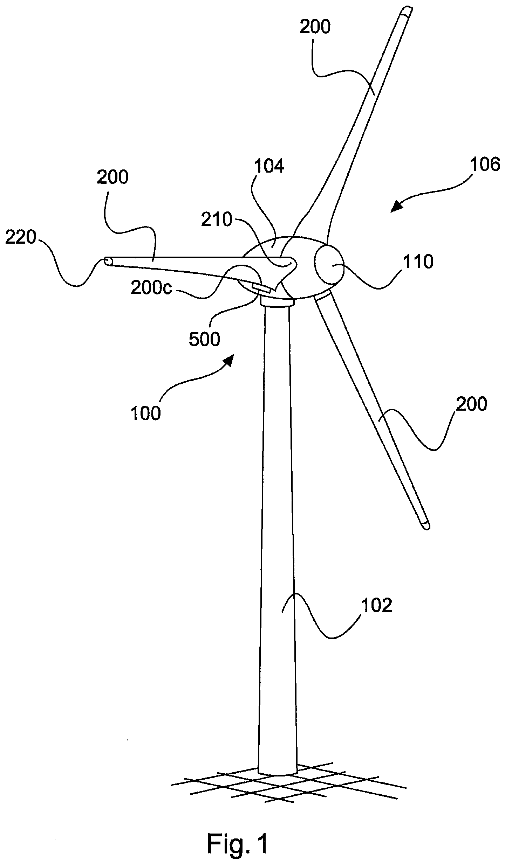

Fig. 1 zeigt eine schematische Darstellung einer Windenergieanlage. Die Windenergieanlage 100 weist einen Turm 102 und eine Gondel 104 auf. An der Gondel 104 ist ein Rotor 106 mit drei Rotorblättern 200 und einem Spinner 110 vorgesehen. Der Rotor 106 wird in Betrieb durch den Wind in eine Drehbewegung versetzt und treibt einen Generator in der Gondel 104 an, um elektrische Energie zu erzeugen.

Gemäß der Erfindung weist das Rotorblatt ein Flatbackprofil auf, das heißt das Rotorblatt weist eine abgeschnittene bzw. stumpfe Hinterkante 200c auf. Im Bereich der stumpfen Hinterkante 200c ist eine Hinterkantenerweiterung 500 vorgesehen.

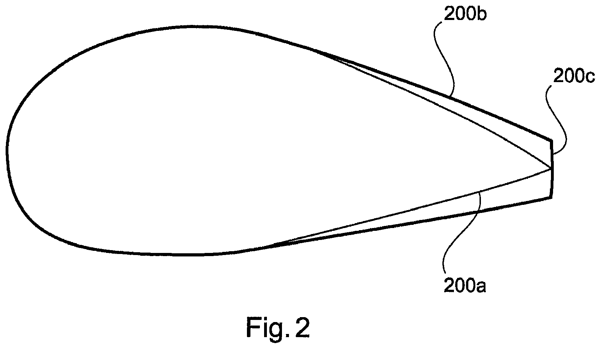

Fig. 2 zeigt eine Schnittansicht von zwei Windenergieanlagen-Profilen. In Fig. 2 ist ein Profil 200a eines herkömmlichen Rotorblattes und ein Flatbackprofil 200b mit einer abgeschnittenen bzw. stumpfen Hinterkante 200c gezeigt.

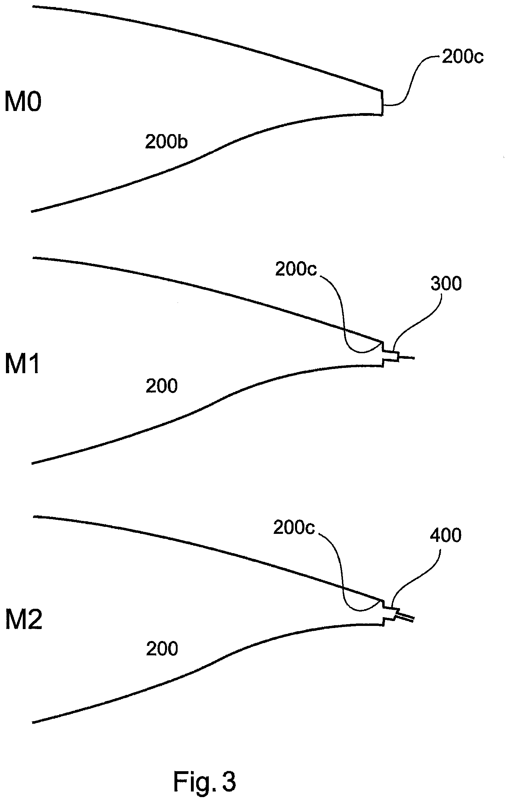

Fig. 3 zeigt eine schematische Darstellung von drei verschiedenen Windenergieanlagen-Profilen jeweils mit einer abgeschnittenen Hinterkante bzw. einem Flatbackprofil. Das erste Windenergieanlagen-Profil M0 zeigt ein Standard Flatbackprofil eines Rotorblattes. Das zweite Windenergieanlagen-Rotorblattprofil M1 zeigt ein Profil eines Rotorblattes einer Windenergieanlage mit einer stumpfen Hinterkante 200c und einer Hinterkantenerweiterung 300.

Das dritte Windenergieanlagen-Rotorblattprofil M2 weist ein Flatbackprofil mit einer Hinterkantenerweiterung 400 auf, die nicht senkrecht auf der Hinterkante steht.

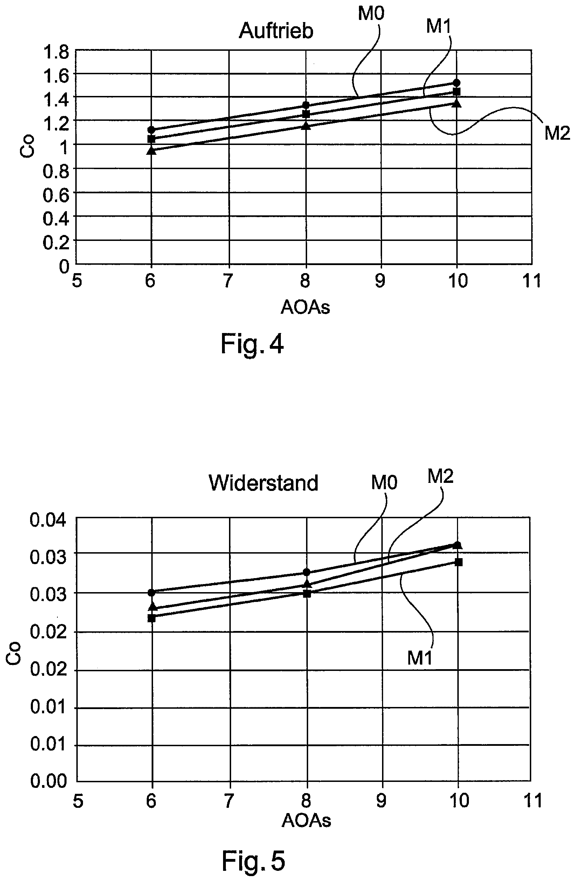

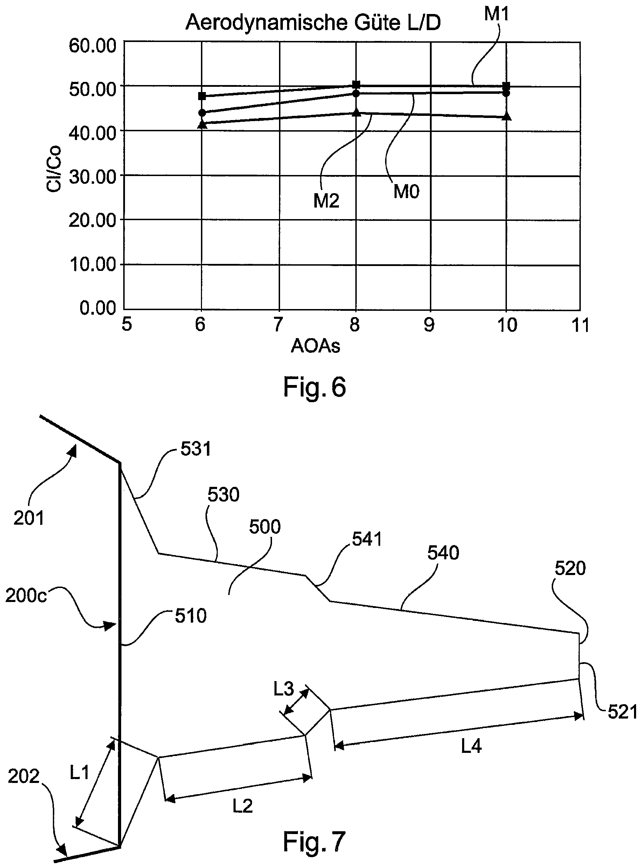

In Fig. 4 ist der Auftriebsbeiwert der drei Rotorblattprofile gezeigt, in Fig. 5 ist der Widerstandsbeiwert der drei Rotorblattprofile und in Fig. 6 ist die aerodynamische Güte, also das Verhältnis von Auftrieb zu Widerstand der drei Rotorblattprofile dargestellt.

Durch die erfindungsgemäße Ausgestaltung der Hinterkantenerweiterung kann ein Auftreten eines Blunt Trailing-Edge Vortex Shedding erheblich reduziert werden, so dass eine von-Karman'sche Wirbelstraße im Wesentlichen vermieden wird. Gemäß der Erfindung weist das Windenergieanlagen-Rotorblatt ein Flatbackprofil auf, bei welchem die Saugseite und die Druckseite des Rotorblattes an der Hinterkante nicht direkt zusammenlaufen. Vielmehr weist die Hinterkante eine gewünschte Dicke im Vergleich zur Profilsehne auf.

Das Vorsehen von Windenergieanlagen-Rotorblättern mit Flatbackprofilen führt zu einer konstruktiven- bzw./oder fertigungstechnischen Verbesserung. Wenn das Flatbackprofil insbesondere im Nabenbereich des Rotorblattes verwendet wird, dann kann dies zu einem positiven Einfluss der aerodynamischen Güte führen. Dies kann dadurch erklärt werden, dass die Grenzschicht bei einem klassischen Profil bei hoher relativer Dicke aufgrund der steileren Kontur frühzeitig abreißen kann. Durch die erfindungsgemäße Ausgestaltung der Hinterkante bzw. die erfindungsgemäße Hinterkantenerweiterung kann eine von-Karman'sche Wirbelstraße vermieden werden.

Die erfindungsgemäße Ausgestaltung der Hinterkantenerweiterung ist ebenfalls vorteilhaft im Hinblick auf eine aus dem Stand der Technik bekannte, sog. "Splitter Plate" an der Hinterkante. Durch die erfindungsgemäße Ausgestaltung der Hinterkante insbesondere mit der abgestuften Hinterkantenerweiterung können zyklische Wirbelablösungen vermieden werden. Wie aus Fig. 5 ersichtlich, kann der Widerstand der Rotorblattprofile M1, M2 in einem Anstellwinkelbereich zwischen 6 und 10° reduziert werden. Im Gegensatz dazu wird jedoch der Auftrieb der Rotorblattprofile M1 und M2 verschlechtert im Hinblick auf das Rotorblattprofil M0.

Die aerodynamische Güte des Rotorblattprofils M1 ist besser als die aerodynamische Güte der anderen beiden Rotorblattprofile. Insbesondere fällt auf, dass die aerodynamische Güte des Rotorblattprofils M2 schlechter ist als die anderen beiden. Dies kann insbesondere auf die schräge Ausgestaltung der Hinterkantenerweiterung zurückgeführt werden.

Fig. 7 zeigt eine schematische Schnittansicht einer Hinterkante eines erfindungsgemäßen Windenergieanlagen-Rotorblattes. Das Rotorblatt weist eine Saugseite 201, eine Druckseite 202 und eine stumpfe Hinterkante 200c auf. Ferner weist das Rotorblatt eine Hinterkantenerweiterung 500 auf. Die Hinterkantenerweiterung 500 weist ein erstes Ende 510 und ein zweites Ende 520, sowie einen ersten Abschnitt 530 und einen zweiten Abschnitt 540 auf. Die Dicke des ersten Abschnittes 530 ist geringer als die Dicke der stumpfen Hinterkante 200c. Die Dicke des zweiten Abschnittes 540 ist geringer als die Dicke des ersten Abschnittes 530. Damit ist eine Hinterkantenerweiterung 500 mit mindestens zwei Stufen vorgesehen. Im Übergang zwischen der stumpfen Hinterkante und dem ersten Abschnitt ist ein erster und zweiter Winkel α₁, α₂ vorgesehen und in dem Übergang zwischen dem ersten und zweiten Abschnitt 530, 540 kann ein dritter und vierter Winkel α₃, α₄ vorgesehen sein.

Ferner kann die Hinterkantenerweiterung 500 durch vier Längen L₁ - L₄ beschrieben werden.

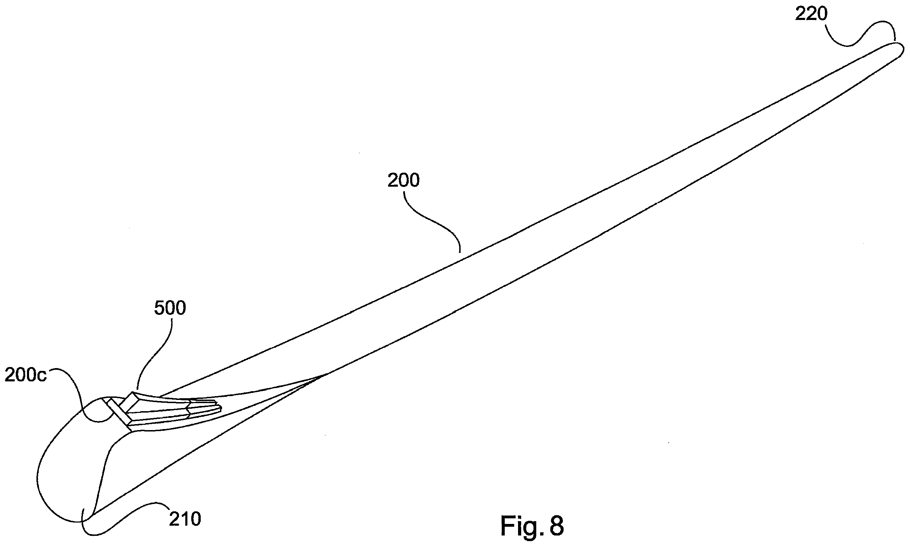

Fig. 8 zeigt eine schematische Darstellung eines Windenergieanlagen-Rotorblattes gemäß der Erfindung. Das Windenergieanlagen-Rotorblatt 200 weist einen Rotorblattwurzelbereich 210 und einen Rotorblattspitzenbereich 220 auf. Im Bereich der Rotorblattwurzel 210 weist das Rotorblatt eine stumpfe Hinterkante 200c sowie eine Hinterkantenerweiterungseinheit 500 auf. Die Ausgestaltung der stumpfen Hinterkante 200c sowie die Hinterkantenerweiterungseinheit 500 kann wie oben beschrieben ausgestaltet sein.

Gemäß der Erfindung wird somit ein Windenergieanlagen-Rotorblatt vorgesehen, welches insbesondere im Bereich der Rotorblattwurzel 210 eine stumpfe Hinterkante 200c sowie eine Hinterkantenerweiterungseinheit 500 aufweist. Die Hinterkantenerweiterungseinheit kann im Wesentlichen senkrecht zur stumpfen Hinterkante angeordnet sein und kann optional einen ersten und zweiten Abschnitt aufweisen. Der Übergang von der stumpfen Hinterkante zu dem ersten Abschnitt kann senkrecht oder nicht senkrecht und ein Übergang zwischen dem ersten und zweiten Abschnitt kann ebenfalls senkrecht oder nicht senkrecht ausgestaltet sein.

Gemäß der Erfindung kann durch die Verwendung einer abgestuften Hinterkante das Abgehen zyklischer Wirbel effektiv verhindert werden und somit eine aeroakustische Lärmquelle eliminiert werden.

## Patentansprüche

1. Windenergieanlagen-Rotorblatt (200), mit
einer Saugseite (201),
einer Druckseite (202),
einem Rotorblattwurzelbereich (210) und einer Rotorblattspitze (220),
einer stumpfen Hinterkante (200c) und
einer Hinterkantenerweiterungseinheit (500), welche an der stumpfen Hinterkante (200c) angeordnet ist und mindestens zwei Stufen aufweist,
wobei die Hinterkantenerweiterungseinheit (500) ein erstes Ende (510) und ein zweites Ende (520) sowie einen ersten und zweiten Abschnitt (530, 540) aufweist,
**dadurch gekennzeichnet, dass**
ein Übergang von der stumpfen Hinterkante (200c) zu dem ersten Abschnitt (530) am ersten Ende (510) der Hinterkantenerweiterungseinheit (500) nicht senkrecht und ein Übergang zwischen dem ersten und zweiten Abschnitt (530, 540) ebenfalls nicht senkrecht ausgestaltet ist,
wobei die stumpfe Hinterkante (200c) und die Hinterkantenerweiterungseinheit (500) im Rotorblattwurzelbereich (210) vorgesehen ist,
wobei das zweite Ende (520) der Hinterkantenerweiterungseinheit (500) stumpf ausgestaltet ist.

2. Windenergieanlagen-Rotorblatt nach Anspruch 1, wobei
die Hinterkantenerweiterungseinheit (500) im Wesentlichen senkrecht zur stumpfen Hinterkante (200c) angeordnet ist.

3. Windenergieanlage mit mindestens einem Windenergieanlagenrotorblatt nach einem der Ansprüche 1 oder 2.

## Claims

1. A wind turbine rotor blade (200) comprising
a suction side (201),
a pressure side (202),
a rotor blade root region (210) and a rotor blade tip (220),
a blunt trailing edge (200c), and
a trailing edge enlargement unit (500) which is arranged at the blunt trailing edge (200c) and has at least two stages,
wherein the trailing edge enlargement unit (500) has a first end (510) and a second end (520) as well as a first and a second portion (530, 540),
**characterized in that** a transition from the blunt trailing edge (200c) to the first portion (530) at the first end (510) of the trailing edge enlargement unit (500) is non-perpendicular and a transition between the first and second portions (530, 540) is also nonperpendicular,
wherein the blunt trailing edge (200c) and the trailing edge enlargement unit (500) are provided in the rotor blade root region (210),
wherein the second end (520) of the trailing edge enlargement unit (500) is blunt.

2. A wind turbine rotor blade as set forth in claim 1 wherein
the trailing edge enlargement unit (500) is arranged substantially perpendicularly to the blunt trailing edge (200c).

3. A wind turbine having at least one wind turbine rotor blade as set forth in one of claims 1 or 2.

## Revendications

1. Pale de rotor d'éolienne (200), avec
un extrados (201),
un intrados (202),
une zone de pied de pale de rotor (210) et un bout de pale de rotor (220),
un bord de fuite (200c) émoussé et
une unité d'élargissement de bord de fuite (500) qui est agencée au niveau du bord de fuite (200c) émoussé et présente au moins deux étages,
dans laquelle l'unité d'élargissement de bord de fuite (500) présente une première extrémité (510) et une seconde extrémité (520) ainsi qu'une première et seconde section (530, 540),
**caractérisée en ce que**
une transition du bord de fuite (200c) émoussé à la première section (530) au niveau de la première extrémité (510) de l'unité d'élargissement de bord de fuite (500) est configurée de manière non perpendiculaire et une transition entre la première et seconde section (530, 540) est également configurée de manière non perpendiculaire,
dans laquelle le bord de fuite (200c) émoussé et l'unité d'élargissement de bord de fuite (500) sont prévus dans la zone de pied de pale de rotor (210),
dans laquelle la seconde extrémité (520) de l'unité d'élargissement de bord de fuite (500) est configurée de manière émoussée.

2. Pale de rotor d'éolienne selon la revendication 1, dans laquelle
l'unité d'élargissement de bord de fuite (500) est agencée sensiblement perpendiculairement au bord de fuite (200c) émoussé.

3. Eolienne avec au moins une pale de rotor d'éolienne selon l'une quelconque des revendications 1 ou 2.
